Europäisches Patentamt

European Patent Office

Office européen des brevets

(19)

(11) Veröffentlichungsnummer : **0 162 905**
**B1**

(12) **EUROPÄISCHE PATENTSCHRIFT**

(45) Veröffentlichungstag der Patentschrift :
09.09.87

(21) Anmeldenummer : 85900157.0

(22) Anmeldetag : 28.11.84

(86) Internationale Anmeldenummer :
PCT/HU 84/00055

(87) Internationale Veröffentlichungsnummer :
WO/8502388 (06.06.85 Gazette 85/13)

(51) Int. Cl.⁴ : **B 65 G 47/14**

(54) VORRICHTUNG ZUR ORDNUNG UND ZUFÜHRUNG VON VOLLEN ODER HOHLEN ZYLINDRISCHEN KÖRPERN, Z.B. RINGEN ODER SCHEIBEN.

(30) Priorität : 28.11.83 HU 407183

(43) Veröffentlichungstag der Anmeldung :
04.12.85 Patentblatt 85/49

(45) Bekanntmachung des Hinweises auf die Patenterteilung : 09.09.87 Patentblatt 87/37

(84) Benannte Vertragsstaaten :
AT CH DE FR LI SE

(56) Entgegenhaltungen :
DD-A- 122 215
FR-A- 2 487 306

(73) Patentinhaber : MAGYAR GÖRDÜLÖCSAPAGY
MÜVEK
Szabadsag utja 129
H-Debrecen (HU)

(72) Erfinder : MAGAS, László
Budai Ezsaiás u. 3.
H-4024 Debrecen (HU)
Erfinder : SZABO, Géza
Alkotmány u. 8.
H-4029 Debrecen (HU)
Erfinder : DARIN, Sándor
Kemény Zyigmond u. 17.
H-4029 Debrecen (HU)

(74) Vertreter : Patentanwälte Viering & Jentschura et ai
Steinsdorfstrasse 6
D-8000 München 22 (DE)

**Beschreibung**

Die Erfindung betrifft eine Vorrichtung zum Ordnen und Zuführen von vollen oder hohlen zylindrischen Körpern wie z. B. Ringen und Scheiben gemäß dem Oberbegriff des Anspruchs 1. Dabei ist es gleichgültig, ob der Mantel der zylindrischen Körper — sei es der Außenmantel oder der Innenmantel — glatt oder gegliedert ist.

Die den Gegenstand der Erfindung bildenden Vorrichtungen werden im allgemeinen an Maschinen verwendet, die zur Fertigung zylindrischer Körper insbesondere bei der Massenproduktion dienen. Unter Berücksichtigung dieser Tatsache ist es von äußerster Wichtigkeit, daß eine Hochleistungsanlage zum Ordnen und Zuführen zylindrischer Körper zur Verfügung steht und menschliche Eingriffe möglichst vermieden werden.

Vorrichtungen zu ähnlichen Zwecken sind bekannt. Im allgemeinen sind diese so aufgebaut, daß in einem Behälter eine große, noch ungeordnete Menge der als Werkstücke in Frage kommenden zylindrischen Körper vorhanden ist und eine endlose Kette, ein Gurt oder Förderband die zylindrischen Körper aus dem Behälter zur Zuführungsstelle fördert. An der endlosen Kette, dem Gurt oder dem Förderband der Transporteinheit sind im allgemeinen schräge Latten angebracht, die einen Anschlag für die weiterbeförderten zylindrischen Körper bilden. Die zylindrischen Körper gelangen auf die am oberen Ende der Transporteinheit angeordnete, zumeist geneigte Bahn auf Grund der Schwerkraft und von dort in einer Mulde oder auf einer mindestens einseitig begrenzten Bahn rollend zur Bearbeitungsstelle.

Ein typisches Beispiel für die bekannten Zuführungs- und Ordnungsvorrichtungen stellt die Lösung nach der HU-A-170 299 dar. Bei der aus der Beschreibung erkennbaren Lösung ist in dem die ungeordnete Masse der zylindrischen Körper aufnehmenden Behälter ein schräg stehender endloser Fördergurt eingetaucht, der mit Auftraglatten versehen ist. An den schräg angeordneten, mit Auftraglatten versehenen Gurt schließt sich ein schwingungsfähiger freilaufender Zylinder an. Die aus dem Behälter verhältnismäßig ungeordnet ausgehobenen zylindrischen Körper werden von dem freilaufenden Zylinder zwischen den Auftraglatten flachgelegt und geordnet. Der Nachteil derartiger Vorrichtungen besteht darin, daß sich Ringe oder Scheiben mit gegliederter Oberfläche verfangen und so keine stabile Position erreichen können. Ein weiterer Nachteil dieser Vorrichtungen besteht darin, daß diese lediglich zum Fördern von zylindrischen Körpern eines relativ engen Mäßbereichs geeignet sind. Die als Beispiel erwähnte Vorrichtung bietet nur für das Fördern und Ordnen jener zylindrischen Körper eine befriedigende Lösung, bei denen das Verhältnis des Durchmessers zur Höhe 2,5 nicht unterschreitet. Diese Maßbeschränkung ist für Massenproduktion führende und Produkte verschiedener Dimensionen herstellende Werke äußerst ungünstig.

Eine weitere Lösung ist aus der HU-A-176 416 bekanntgeworden. Im Wesentlichen ist auch hier eine in einen Behälter eintauchende Transporteinheit vorgesehen, die durch ein endloses Band oder eine Kette oder einen Gurt gebildet wird. Auf dem Gurt bzw. Band sind Hebelatten befestigt. Die Transporteinheit wird diskontinuierlich betätigt und fördert die zylindrischen Körper zur Zuführungsstelle, die auch bei dieser Ausführungsform eine sich an die Transporteinheit anschließende geneigte Bahn ist. Im Laufe der Zufuhr rollen die zylindrischen Körper infolge ihres Eigengewichtes ab. Bei dieser Lösung werden die zylindrischen Körper per Hand auf die Transporteinheit gelegt, weswegen die Leistung dieser Vorrichtung eher gering ist. Bei der erwähnten Vorrichtung ist für die Zuführungseinheit eine Automatik eingesetzt, die einen Fühler unter der Bahn der zugeführten zylindrischen Körper aufweist. Wenn nun die Bahn überlastet ist, stellt das von dem Fühler abgegebene Signal die Bewegung der Transporteinheit ab, wodurch Anstauungen oberhalb eines zulässigen Grenzwertes vermieden werden.

Mit Hilfe der erfindungsgemäßen Vorrichtung können die Mängel und Nachteile der bekannten, zu ähnlichen Zwecken dienenden Vorrichtungen beinahe restlos überwunden werden.

Der Erfindung liegt die Aufgabe zugrunde, das Zuführen und Ordnen zylindrischer Körper möglichst ohne manuelle Eingriffe zu bewerkstelligen und dabei das Fördern und Ordnen von Werkstücken in einem breiteren Maßbereich zu ermöglichen.

Bei der erfindungsgemäßen Lösung wird die Anordnung der Grundeinheiten der zu ähnlichen Zwecken dienenden bekannten Vorrichtungen beibehalten, namentlich der Behälter, in dem sich die Werkstücke in ungeordnetem Zustand befinden, die Transporteinheit, die im Wesentlichen ein endloser Gurt, eine Kette oder ein Band ist, wobei auf dem letzteren zur Weiterbeförderung Latten befestigt sind. Auch die sich an das obere Ende der Transporteinheit anschließende Zuführeinheit ist beibehalten.

Das gesetzte Ziel wird durch die erfindungsgemäße Vorrichtung so erreicht wie es im Anspruch 1 angegeben ist. Dies bedeutet, daß die Vorrichtung eine mechanisch bewegte Transportplatte besitzt, mit Hilfe derer die ungeordneten Werkstücke aus dem Behälter auf die durch eine schräge Platte gebildete Rutsche gelangen. An die Rutsche ist eine Legeeinheit angeschlossen, die dafür sorgt, daß die auf der Rutsche ankommenden Werkstücke flach liegen, d. h. diese nicht mit der zylindrischen Fläche auf der Rutsche aufliegen. Die Legeeinheit besteht aus einem Zylinder, der an die Rutsche angenähert oder von ihr entfernt werden kann, sowie einer an der Zylinderfläche ausgestalteten Rippe, die im Wesentlichen als eine eingängige Schraube betrachtet werden kann. Die von der Legeeinheit auf der Rutsche flachgelegten Werkstücke gelangen in den mit einer Kipplatte unterstützten Zwischenbehälter, von dem aus sie sich auf Grund der Schwerkraft in Richtung der an dem Förderband der Transporteinheit angeordneten Latten bewegen. Die Transporteinheit kann diskontinuierlich betätigt werden. Zu der sich an das Oberteil der Transporteinheit anschließenden Zuführungseinheit gelangen die zylindrischen Körper auf Grund der Schwerkraft. Die erfindungsgemäße Vorrichtung enthält eine Rangiereinheit, die bewirkt, daß die Werkstücke geordnet an der Zuführungseinheit ankommen, d. h. nicht aufeinander angehäuft und nur in einer Schicht. Diese Rangiereinheit besteht aus einer gegenüber der schrägen Bahn der Zuführungseinheit geneigt positionierten, endlosen Klauenkette, deren Klauen die obenliegenden der in mehreren Reihen geförderten Zylinder abschieben, wodurch nur eine Reihe zu der Zuführungseinheit gelangen kann.

Um die erfindungsgemäße Vorrichtung automatisieren zu können, ist bei der erwähnten Rutsche unter der den Boden des Sammelraumes bildenden Kipp-Platte oder Kipplatte ein Positionsfühler angeordnet, der die Aufgabe hat, bei einer Überlastung der Kipplatte ein Signal abzugeben, wodurch der Zylinder der Legeinheit und/oder die Transportplatte abgestellt werden können und das Fördern in den Sammelraum wird so lange abgestellt, wie die Überlastung der Kipplatte besteht. Die Automatisierung wird auch dadurch gefördert, daß bei einer Anhäufung in der Rangiereinheit das Fühlerorgan das Abstellen der Transporteinheit auslöst. Die Vorrichtung ist mit einer auch die erwähnten Fühler beinhaltenden Steuereinheit versehen, die die Funktion der Vorrichtung auch ohne menschliche Eingriffe steuern kann.

Bei der erfindungsgemäßen Vorrichtung werden die Werkstücke so aus dem Behälter herausgenommen, daß ein von einem Getriebe bewegter, vorzugsweise bogenförmiger, schwingender Arm in den Behälter eintaucht und die am oberen Ende des Armes angeordnete Transportplatte eine Gruppe aus der sich im Behälter befindenden Menge der zylindrischen Körper heraushebt. Die am erwähnten schwingenden Arm befestigte Transportplatte hat in der oberen Endstellung eine Neigung, die es den zylindrischen Körpern ermöglicht, von selbst auf die Rutsche zu gelangen. Die auf der Rutsche stehenden Werkstücke werden von der Rippe am rotierenden Zylinder der oben erwähnten Legeeinheit flachgelegt.

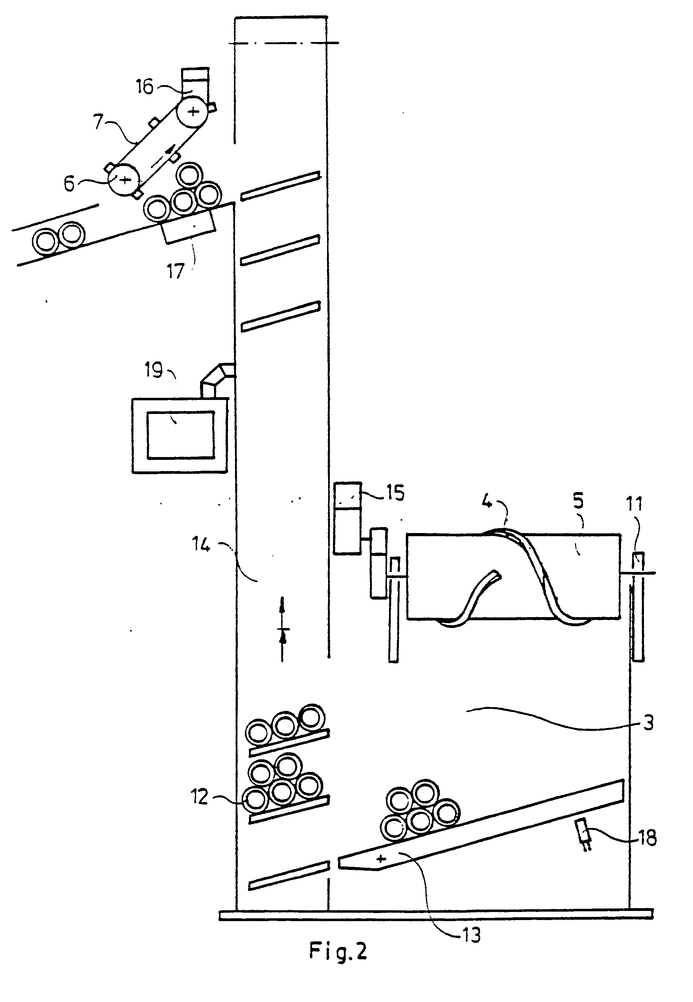

Die auf der Rutsche liegenden flachgelegten Werkstücke gelangen durch ihr Eigengewicht zum Zwischenbehälter, von dem sie auf die Transporteinheit rollen oder rutschen ; so werden die zylindrischen Körper von der Rutsche schon geordnet weiterbefördert. Auf den Latten der Transporteinheit können die zylindrischen Körper auch in mehreren Reihen liegen, wie dies aus der Figur 2 wohl ersichtlich ist, da auch so keine Störungen verursacht werden.

Demnach besteht das Wesentliche der erfindungsgemäßen Vorrichtung darin, daß ein Schwingarm vorgesehen ist, der eine sich zwischen dem unteren Teil des Behälters und dem oberen Niveau einer schrägen Rutsche bewegende Transportplatte trägt, wobei über der Rutsche eine Legeeinheit angeordnet ist, die mit einem mit einer spiralförmigen Rippe versehenen, rotierenden Zylinder ausgestattet ist, dessen Achse im Wesentlichen zu der Rutschenebene parallel verläuft.

Bei einer vorteilhaften Ausführungsform der erfindungsgemäßen Vorrichtung ist der zu der Legeeinheit gehörende Zylinder an einen kippbaren Träger montiert.

Bei einer weiteren vorteilhaften Ausführungsform der erfindungsgemäßen Vorrichtung ist der Zylinder der Legeeinheit mit einem Getriebe verbunden.

Eine vorteilhafte Ausführungsform bildet auch die Lösung, bei der am unteren Ende der Rutsche ein Sammelraum vorgesehen ist, dessen sich bewegender Boden vorteilhaft durch Kipplatten gebildet wird.

Eine weitere vorteilhafte Ausführungsform der erfindungsgemäßen Vorrichtung ist dadurch gekennzeichnet, daß die Vorrichtung einen mit dem sich bewegenden Boden, vorteilhaft mit der Kipplatte, zusammenarbeitenden Positionsfühler aufweist, der das Getriebe der Legeeinheit und/oder das die Transportplatte in Bewegung setzende Getriebe steuert.

Vorteilhaft wird die erfindungsgemäße Vorrichtung so gestaltet, daß an dem endlosen Band der Transporteinheit schräge Latten angeordnet sind.

In vielen Anwendungsfällen ist eine Ausführungsform recht vorteilhaft, bei der zwischen der Transporteinheit und der Zuführungseinheit eine die zylindrischen Körper in eine Reihe ordnende Rangiereinheit montiert ist.

Eine weitere zweckmäßige Ausführungsform kann erreicht werden, wenn eine zu der Rangiereinheit gehörende endlose Klauenkette verwendet wird, deren Stellung gegenüber der Führungsbahn der Körper geändert werden kann.

Eine Ausführungsform der erfindungsgemäßen Vorrichtung scheint äußerst zweckmäßig zu sein, bei der die Rangiereinheit einen Fühler enthält, der das Getriebe der Transporteinheit steuert und die Belastung der Führungsbahn der Körper wahrnimmt.

Die Erfindung wird anhand eines vorteilhaften Ausführungsbeispiels mit Hilfe der beiliegenden Zeichnungen näher erläutert ; es zeigen :

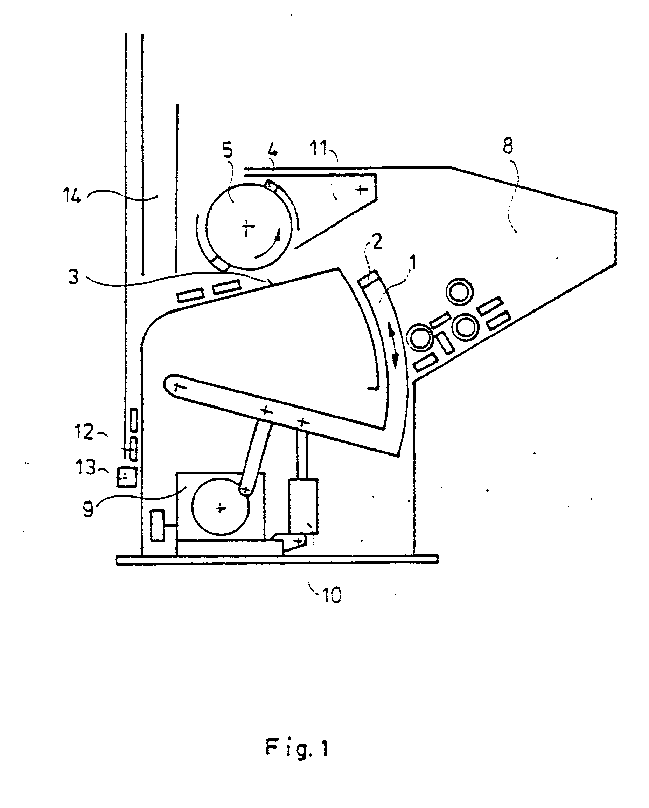

Figur 1 die schematisch dargestellte Seitenansicht des Details der erfindungsgemäßen Vorrichtung, das den Behälter und die dazugehörende Steuereinheit enthält ;

Figur 2 die Vorderansicht der erfindungsgemäßen Vorrichtung, die neben der Legeeinheit auch die Transporteinheit und die Zuführungseinheit enthält.

Bei der hier als Beispiel gezeigten Vorrichtung befinden sich die zu bearbeitenden zylindrischen Körper in ungeordnetem Zustand im Behälter 8, in den der bogenförmige Schwingarm 1 eingreift der von dem Getriebe 9 und dem pneumatischen Zylinder 10 bewegt wird. Am oberen Teil des Schwingarms 1 ist die Transportplatte 2 montiert, die die in der unteren Endstellung des Schwingarms 1 auf diesem liegenden Werkstücke über das obere Niveau der schrägen Rutsche hebt. Die Rutsche ist eine geneigte ebene Platte, auf der die Werkstücke auf Grund der Gravitation leicht hinunterrutschen können. In unserem Beispiel sind die Werkstücke Ringe 12.

Mit Rücksicht darauf, daß sich die mittels der Transportplatte 2 hochgehobenen und auf die Rutsche 3 gelangenden Werkstücke noch im ungeordneten Zustand befinden, ist über der Rutsche 3 erfindungsgemäß eine Legeeinheit angeordnet. Diese Legeeinheit enthält im Wesentlichen den in den Trägern 11 gelagerten und von dem Getriebe 15 angetriebenen Zylinder 5, wobei an dem Zylinder 5 eine einer eingängigen Schraube ähnelnde Rippe 4 angeformt ist. Der Zylinder 5 und damit die Rippe 4 können mit Hilfe des kippbaren Trägers 11 an die Rutsche 3 angenähert bzw. von ihr entfernt werden. Auf diese Weise kann dieselbe Legeeinheit für Werkstücke verschiedener Abmessungen verwendet werden.

Die auf die flache Stirnfläche gelegten Werkstücke gelangen von der Rutsche 3 in den Zwischenbehälter, dessen Unterteil von der schräg angeordneten Kipplatte 13 begrenzt wird. Diese Kipplatte ist zur Transporteinheit 14 geneigt, wodurch die Ringe 12 auf Grund der Schwerkraft zur Transporteinheit 14 rollen. Sollten so viele Ringe 12 von der Rutsche 3 auf die Kipplatte 13 gelangen, daß eine Anhäufung zustandekommt, löst die Kipplatte 13 durch ihre geänderte Stellung ein Signal in dem Positionsfühler 18 aus, wodurch durch Abstellen des Getriebes 9 der Transport der Ringe 12 aus dem Behälter 8 auf die Rutsche 3 abgestellt wird. Gleichzeitig kann die Legeeinheit durch das Abstellen des Getriebes 15 stillgesetzt werden. Zur Beseitigung der Anstauung genügt auch, wenn das Getriebe 15 allein abgestellt wird.

Das zu der Transporteinheit 14 gehörende endlose Band, Gurt oder Kette trägt schräg positionierte Latten, wodurch die Transporteinheit 14 mit höchster Sicherheit die darauf liegenden Werkstücke — in unserem Beispiel — Ringe 12 fördern kann. Die Transporteinheit 14 arbeitet diskontinuierlich.

An den oberen Teil der Transporteinheit 14 schliesst sich die Zuführungseinheit an, die im Wesentlichen durch eine schräge Mulde oder einen Kanal oder ähnliches gebildet ist. An dem der Transporteinheit 14 zugewandten Teil der Zuführungseinheit ist die Rangiereinheit vorgesehen, die gewährleistet, daß die Werkstücke in einer Reihe bzw. in einer einzigen Schicht weitergefördert werden. Die Rangiereinheit besteht im Wesentlichen aus einer vom Getriebe 16 in Bewegung gehaltenen auf den Kettenrädern 6 laufenden Klauenkette 7. Diese Klauenkette 7 ist zur Bahn der Zuführungseinheit geneigt und so eingestellt, daß die sich in der zweiten Schicht befindenden Ringe 12 von den Klauen der Kette abgeschoben werden. Auf diese Weise können die Werkstücke hinter der Rangiereinheit nur in einer Schicht weiterfahren. Um Anhäufungen bei der Rangiereinheit zu vermeiden, wurde ein Fühler 17 eingebaut. Der Fühler 17 nimmt im Wesentlichen das Gewicht oder eine Verschiebung wahr und stellt den Antrieb der Transporteinheit auf bekannte Weise ab, wenn sich auf der Bahn vor der Zuführungseinheit eine Größere Menge von Werkstücken angehäuft hat.

Die ganze Vorrichtung wird von dem bekannten Steuerwerk 19 gesteuert.

Die Funktion der erfindungsgemässen Vorrichtung wird durch deren strukturellen Aufbau offensichtlich.

Die Werkstücke — in unserem Fall die Ringe 12 — werden in den Behälter 8 eingefüllt. Danach werden sowohl das Getriebe 9, das den Schwingarm 1 bewegt, wie auch das Getriebe 15, das den zu der Legeeinheit gehörenden Zylinder 5 dreht, in Gang gesetzt ; das Getriebe 16, das die Klauenkette 7 der Rangiereinheit antreibt, wird ebenfalls angelassen. Der Abmessung der Ringe 12 entsprechend wird die Position des Zylinders 5 mittels des Trägers 11 schon früher eingestellt und zwar so, daß die Kanten der Rippe 4 von der Ebene der Rutsche 3 in der gewünschten Entfernung liegen. Während des Betriebs greift die am Ende des Schwingarms 1 befestigte Transportplatte quasi in die Werkstücke während ihrer Bewegung nach unten ein, wobei während der Bewegung nach oben die auf der Transportplatte 2 zurückbleibenden Werkstücke — in unserem Beispiel die Ringe 12 — über die obere Kante der Rutsche 3 gefördert werden. In dieser Stellung rutschen die Werkstücke auf die Rutsche 3 herab, weil sich im Laufe der Bewegung des Schwingarms 1, in der oberen Endstellung, die Transportplatte 2 zur Rutsche 3 so stark neigt, daß die hochgehobenen Werkstücke von der Transportplatte 2 von selbst abrutschen. Die noch immer ungeordneten Ringe 12 wandern zu dem Spalt unter dem Zylinder 5. Diejenigen Werkstücke, die auf ihrem Mantel stehend unter den Zylinder 5 gelangen, werden von der Rippe 4 flachgelegt. Die Rippe 4 bewirkt auf die Werkstücke, eine Verschiebung in Querrichtung und legt sie flach, und zwar so, daß die zwischen dem Zylinder 5 und der Rutsche 3 hindurchgelangenden Werkstücke an ihren flachen Stirnflächen aufliegend auf der Rutsche 3 weiterwandern. Das bedeutet, daß die Ringe 12 bereits geordnet von der Rutsche 3 auf die Kipplatte 13 oder auf eine andere, mit einem Kippboden versehene Lagerstelle gelangen. Von hier gelangen die Werkstücke auf Grund der Schwerkraft zur Transporteinheit 14, und zwar so, daß die Werkstücke von den auf dem sich diskontinuierlich bewegenden Band befestigten Latten weitergefördert werden. Sollte die Kipplatte 13 oder andere der Kipplatte entsprechende, sonstige Bestandteile infolge einer Anhäufung über das zulässige Maß hinaus belastet werden, kommt die Kipplatte diese durch Verkippung mit dem Positionsfühler 18 in Berührung, der das Getriebe 9 und/oder das Getriebe 15 abstellt, wodurch die Förderung zu dem erwähnten Zwischenbehälter aufhört. In einer von der Überlastung freien Zeitspanne liefert die diskontinuierlich arbeitende Transporteinheit 14 die Werkstücke zu der Zuführungseinheit. Im Wesentlichen ist die Zuführungseinheit eine schräge Bahn, an deren der Transporteinheit 14 zugewandtem Teil die Rangierstelle ausgebildet ist, wo sich die Rangiereinheit befindet. Hier rollen die Klauen der von dem Getriebe 16 gedrehten endlosen Klauenkette 7 — wie es aus der Figur 2 ersichtlich ist — alle Werkstücke ab, die über der Grundreihe auf der schrägen Bahn liegen, sie werden abgeschoben und können nicht weiterwandern. Dementsprechend kann hinter der Rangiereinheit nur eine einzige Schicht der Werkstücke in der Zuführungseinheit weiterfahren. Sollte nun an der Rangiereinheit eine Überlastung auftreten, wird diese von dem Fühler 17 wahrgenommen, wodurch das Getriebe der Transporteinheit 14 abgestellt wird.

Aus der als Beispiel dargestellten Lösung geht eindeutig hervor, daß die erfindungsgemäße Vorrichtung auf äußerst einfache Weise das Ordnen und Zuführen zylindrischer Werkstücke realisiert. Bei der erfindungsgemäßen Vorrichtung sind keine menschlichen Eingriffe notwendig. Sie ist geeignet, bei einer an beliebiger Stelle vorkommenden Anhäufung von zylindrischen Körpern eine Betriebsstörung zu verhindern, d. h. das Getriebe vor der Anhäufungsstelle abzustellen und wieder anzuschalten.

Ein großer Vorteil der erfindungsgemäßen Vorrichtung besteht darin, daß durch deren Anwendung das Ordnen, Fördern und Zuführen von Werkstücken mit einer Verhältniszahl von 1,8 D/h ermöglicht wird, wobei D den Außendurchmesser des Werkstückes und h die Höhe bezeichnen. Auf diese Weise ermöglicht die erfindungsgemäße Vorrichtung das Ordnen, Fördern und Zuführen von Verkstücken eines viel größeren Abmessungsbereichs als die bekannten, zu ähnlichen Zwecken dienenden Anlagen. Infolge der hier geschilderten Umstände erweitert die erfindungsgemäße Vorrichtung insbesondere in Hinsicht der Werkstücke von kleineren Dimensionen den Maßbereich· für das Ordnen und Zuführen. Bei der erfindungsgemäßen Vorrichtung ergeben sich keine Schwierigkeiten daraus, daß die Oberfläche der Werkstücke gegliedert ist, da die Legeeinheit unabhängig von einer eventuellen Gliederung die Werkstücke ordnen kann — die Werkstücke verfangen sich nicht. Neben den geschilderten günstigen Eigenschaften arbeitet die erfindungsgemäße Vorrichtung mit einer äußerst hohen Leistung ; so befriedigt sie alle an die Massenproduktion gestellten Forderungen.

### Patentansprüche

1. Vorrichtung zum Ordnen und Zuführen von vollen oder hohlen zylindrischen Körpern, z. B. Ringen oder Scheiben, die einen die ungeordnete Menge der zuzuführenden Körper aufnehmenden Behälter, eine über ein kontinuierlich oder diskontinuierlich bewegbares Band verfügende Transporteinheit, und eine an die letztere angeschlossene Zuführungseinheit aufweist, dadurch gekennzeichnet, daß ein Schwingarm (1) vorgesehen ist, der eine sich zwischen dem unteren Teil des Behälters (8) und dem oberen Niveau einer schrägen Rutsche (3) bewegende Transportplatte (2) trägt, wobei über der Rutsche (3) eine Legeeinheit angeordnet ist, die mit einem mit einer spiralförmigen Rippe (4) versehenen rotierenden Zylinder (5) ausgestattet ist dessen Achse im Wesentlichen parallel zu der Ebene der Rutsche (3) verläuft.

2. Vorrichtung nach Anspruch 1, dadurch gekennzeichnet, daß der zu der Legeeinheit gehörende Zylinder (5) an einem kippbaren Träger (11) montiert ist.

3. Vorrichtung nach Anspruch 1 oder 2, dadurch gekennzeichnet, daß der Zylinder (5) der Legeeinheit mit einem Getriebe (15) verbunden ist.

4. Vorrichtung nach einem der Ansprüche 1 bis 3, dadurch gekennzeichnet, daß ein an das untere Ende der Rutsche (3) anschließender Sammelraum vorhanden ist, dessen sich bewegender Boden vorteilhaft durch eine Kipplatte (13) gebildet ist.

5. Vorrichtung nach Anspruch 4, dadurch gekennzeichnet, daß sie einen mit dem sich bewegenden Boden, vorteilhaft mit der Kipplatte (13) zusammenarbeitenden, das Getriebe (15) der Legeeinheit und/oder ein die Transportplatte (2) in Bewegung setzendes Getriebe (9) steuernden Positionsfühler (18) aufweist.

6. Vorrichtung nach einem der Ansprüche 1 bis 5, dadurch gekennzeichnet, daß an dem endlosen Band der Transporteinheit schräg positionierte Latten vorhanden sind.

7. Vorrichtung nach einem der Ansprüche 1 bis 6, dadurch gekennzeichnet, daß zwischen der Transporteinheit (14) und der Zuführungseinheit eine die zylindrischen Körper in eine einschichtige Reihe ordnende Rangiereinheit eingeschaltet ist.

8. Vorrichtung nach Anspruch 7, dadurch gekennzeichnet, daß zu der Rangiereinheit eine endlose Klauenkette (7) gehört, deren Position gegenüber der die Körper abstützenden Bahn geändert werden kann.

9. Vorrichtung nach Anspruch 8, dadurch gekennzeichnet, daß ein Fühler (17) vorgesehen ist, der das Getriebe der Transporteinheit steuert und die Belastung der Führungsbahn der Körper wahrnimmt.

### Claims

1. Apparatus for setting in order and for supplying solid or hollow cylindrical bodies. e. g. rings or disks, comprising a container, receiving the disordered quantity of bodies to be supplied, a transportation unit with a continously or discontinously movable belt, and a supplying unit connected to the transportation unit, characterised in that a swing arm (1) is provided carrying a transportation plate (2), said transportation plate moving between the lower part of the container (8) and the upper level of an inclined slide (3), with a laying unit arranged above the slide (3), said laying unit being equipped with a rotating zylinder (5) provided with a spiral-shaped rib (4), the axis of said cylinder (5) being substantially parallel to the level of the slide (3).

2. Apparatus according to claim 1, characterised in that the cylinder (5) belonging to the laying unit is mounted on a tiltable carrier (11).

3. Apparatus according to claim 1 or 2, characterised in that the cylinder (5) of the laying unit is connected to a gearing (15).

4. Apparatus according to one of claims 1 to 3, characterised in that a collecting chamber joined to the lower end of the slide (3) is provided, the movable bottom of said collecting chamber being preferably constructed as a tilting plate (13).

5. Apparatus according to claim 4, characterised in that it is equipped with a position sensing element (18) cooperting with the movable bottom, which is preferably constructed as a tilting plate (13), and controlling the gearing (15) of the laying unit and/or a gearing (9) for actuating the transportation plate (2).

6. Apparatus according to one of claims 1 to 5, characterised in that the endless belt of the transportation unit is comprised with obliquely positioned ribs.

7. Apparatus according to one of claims 1 to 6, characterised in that a shunting unit is installed between the transportation unit (14) and the feeding unit, said shunting unit arranging the cylindrical bodies in a one-layer row.

8. Apparatus according to claim 7, characterised in that an endless claw chain (7) belongs to the shunting unit, the position of said claw chain (7) being changeable with respect to the race supporting the bodies.

9. Apparatus according to claim 8, characterised in that a sensing element (17) is provided, said sensing element (17) controlling the gearing of the transportation unit and sensing the load of the guiding race of the bodies.

**Revendications**

1. Dispositif d'orientation et d'amenée de corps cylindriques pleins ou creux, tels que bagues ou disques, comportant un récipient recevant la masse non ordonnée de corps à amener, une unité de transport comprenant une bande mobile de manière continue ou intermittente, ainsi qu'une unité d'amenée raccordée à ladite unité de transport, caractérisé en ce qu'il comporte un bras oscillant (1) qui porte une plaque de transport (2) mobile entre la partie inférieure dudit récipient (8) et le niveau supérieur d'une goulotte inclinée (3), cependant qu'il est prévu, au-dessus de ladite goulotte (3), une unité de placement pourvue d'un cylindre rotatif (5) qui présente une nervure hélicoïdale (4) et dont l'axe est sensiblement parallèle au plan de la goulotte (3).

2. Dispositif selon la revendication 1, caractérisé en ce que le cylindre (5) associé à l'unité de placement est monté sur un support pivotant (11).

3. Dispositif selon la revendication 1 ou 2, caractérisé en ce que le cylindre (5) de l'unité de placement est relié à un ensemble d'entraînement (15).

4. Dispositif selon une des revendications 1 à 3, caractérisé en ce qu'il comporte une enceinte collectrice disposée à l'extrémité inférieure de la goulotte (3) et comprenant un fond mobile formé avantageusement d'une plaque pivotante (13).

5. Dispositif selon la revendication 4, caractérisé en ce qu'il comporte un palpeur de position (18) qui coopère avec le fond mobile, avantageusement avec la plaque pivotante (13), et qui commande l'ensemble d'entraînement (15) de l'unité de placement et/ou un ensemble d'entraînement (9) assurant les déplacements de la plaque de transport (2).

6. Dispositif selon une des revendications 1 à 5, caractérisé en ce que la bande sans fin de l'unité de transport comporte des lattes disposées obliquement.

7. Dispositif selon une des revendications 1 à 6, caractérisé en ce qu'une unité de rangement disposant lesdits corps cylindriques en une seule rangée est interposée entre l'unité de transport (14) et l'unité d'amenée.

8. Dispositif selon la revendication 7, caractérisé en ce que ladite unité de rangement est associée à une chaîne sans fin à griffes (7) dont la position par rapport à la piste soutenant lesdits corps est variable.

9. Dispositif selon la revendication 8, caractérisé en ce qu'il comporte un palpeur (17) qui commande l'ensemble d'entraînement de l'unité de transport et qui détecte la charge de la piste de guidage desdits corps.

Fig. 1

1

Fig.2